# EUROPÄISCHE PATENTSCHRIFT

(11) **EP 1 474 269 B1**
(45) Veröffentlichungstag und Bekanntmachung des Hinweises auf die Patenterteilung: **27.07.2005**
(21) Anmeldenummer: 03735417.2
(22) Anmeldetag: 19.05.2003
(51) Int. Cl.: B23Q 11/00, B23Q 11/10, B01D 33/06

(54) **VORRICHTUNG ZUR AUFNAHME UND TRENNUNG VON AN WERKZEUGMASCHINEN ANFALLENDEN SPÄNEN UND KÜHLFLÜSSIGKEIT (ANTRIEB)**
DEVICE FOR RECEIVING AND SEPARATING CHIPS CREATED BY MACHINE-TOOLS AND COOLANT (DRIVE)
DISPOSITIF DESTINE A RECUEILLIR ET A SEPARER DES COPEAUX ET DU LIQUIDE DE REFROIDISSEMENT (MECANISME D'ENTRAINEMENT) TOMBANT DE MACHINES-OUTILS

(30) Priorität: 24.05.2002 DE 10223290
(43) Veröffentlichungstag der Anmeldung: 10.11.2004
(73) Patentinhaber: Mayfran International B.V., 6370 AA Landgraaf (NL)
(72) Erfinder: ACKERMANNS, Leo, J., P., NL-6305 AJ Schin op Geul (NL); ARNTS, Wim, R., E., NL-6463 XV Kerkrade (NL); SIEBEN, Rene, M., NL-6133 XE Sittard (NL); SOUREN, Rimmond, H., B., NL-6231 JR Meersen (NL)
(74) Vertreter: König, Werner, Dipl.-Ing.
(86) Internationale Anmeldenummer: PCT/EP2003/005245
(87) Internationale Veröffentlichungsnummer: WO 2003/099513

(56) Entgegenhaltungen:
- US-A- 5 871 643
- US-B1- 6 332 983
- PATENT ABSTRACTS OF JAPAN vol. 2000, no. 10, 17. November 2000 (2000-11-17) -& JP 2000 202215 A (SHISUTO:KK), 25. Juli 2000 (2000-07-25)
- PATENT ABSTRACTS OF JAPAN vol. 2000, no. 13, 5. Februar 2001 (2001-02-05) -& JP 2000 300914 A (SHISUTO:KK), 31. Oktober 2000 (2000-10-31)
- PATENT ABSTRACTS OF JAPAN vol. 2002, no. 08, 5. August 2002 (2002-08-05) -& JP 2002 102608 A (ENSHU LTD), 9. April 2002 (2002-04-09)

## Beschreibung

Die Erfindung betrifft eine Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden, mit einem Aufnahmetank zur Aufnahme der Späne und der Kühlflüssigkeit, einem sich an den Aufnahmetank anschließenden ansteigenden Führungsabschnitt, einem sich an den Führungsabschnitt anschließenden erhöhten Abgabeabschnitt, einem kettenartigen geschlossenen Transportelement, welches zumindest in dem die Späne und die Kühlflüssigkeit aufnehmenden Bereich sowie in dem Abgabeabschnitt über Umlenkelemente geführt ist, von denen mindestens eines mit einem Drehantrieb gekoppelt ist, und einer drehbar gelagerten Filtertrommel, weiche mit dem Transportelement in Antriebsverbindung steht.

Bei einer bekannten Vorrichtung dieser Art (US 6,332,983) wird ein Transportelement zum Teil um die Filtertrommel herumgeführt und bewirkt dabei unmittelbar eine Drehung dieser Trommel. Daraus folgt, dass die Lager der Trommel von dem Transportelement radial belastet werden, also den Verschleiß dieser Lager erhöhen. Weiter ergibt sich aus der unmittelbaren Antriebsverbindung zwischen Transportelement und Filtertrommel, dass die Umfangsgeschwindigkeit der Filtertrommel immer der Geschwindigkeit des Transportelements entsprechen muss.

Die Aufgabe der vorliegenden Erfindung besteht nun darin, bei einer Vorrichtung der eingangs erwähnten Art die Lagerbelastung der Filtertrommel zu reduzieren und es zu ermöglichen, dass trotz kontinuierlich umlaufendem Transportelement sich ein Filterkuchen am Umfang der Trommel außenseitig bilden kann, der die Filterwirkung positiv beeinflusst.

Diese Aufgabe wird erfindungsgemäß dadurch gelöst, dass das Transportelement mit radialem Abstand zur Filtertrommel auf Führungsschienen an der Filtertrommel entlang geführt ist und dass an dem Transportelement sowie an der Filtertrommel nur in Umfangsrichtung auf die Filtertrommel wirkende, jeweils im Abstand voneinander angeordnete kooperierende Mitnehmerelemente vorgesehen sind.

Dabei wird der bei der Umlenkung des Transportelements im Bereich der Filtertrommel ausgeübte Druck von den Führungsschienen übernommen und die Lager dieser Trommel werden entlastet. Die Filtertrommel folgt dabei nicht zwangsläufig der Bewegung des Transportelements. Vielmehr bestimmt die Anordnung der kooperierenden Mitnehmerelemente an der Filtertrommel einerseits und dem Transportelement andererseits die Phasen, in denen eine Drehung erfolgt und andererseits die Filtertrommel stillsteht. Während dieser Stillstandszeiten kann sich auf der Mantelfläche der Filtertrommel durchaus erwünscht ein Filterkuchen bilden, der die Filterwirkung steigert. In an sich bekannter Weise kann dieser Filterkuchen durch Strahlen gefilterter Kühlflüssigkeit vom Inneren der Filtertrommel her aufgelöst werden, um die Stärke des gebildeten Filterkuchens nicht zu weit anwachsen zu lassen.

Zweckmäßigerweise sind die Mitnehmerelemente an der Filtertrommel als vorstehende Zapfen und am Transportelement als vorstehende, mit den Zapfen kooperierende Anschläge ausgebildet.

Erfindungsgemäß ist femer vorgesehen, dass die Mitnehmerelemente ein Kurbelgetriebe aufweisen, dessen Kurbel mit dem Transportelement in Antriebsverbindung steht und dessen Stange ein Mitnehmerelement trägt, das in die Zahnung eines mit der Filtertrommel gekoppelten Klinkenrades eingreift. Dabei kann der Kurbelradius des Kurbelgetriebes einstellbar sein. Dadurch kann der Winkel bestimmt werden, um den die Filtertrommel bei einer Umdrehung der Kurbel vorgerückt wird.

Beide Antriebsvarianten können jeweils auf einer oder auf beiden Seiten der Filtertrommel angebracht sein. Einerseits kann damit die Umdrehungsgeschwindigkeit erhöht werden, in dem die Antriebe auf beiden Seiten die Trommel abwechselnd antreiben, andererseits können bei synchronem Antrieb beider Trommelseiten Torsionskräfte vermieden werden.

Die erfindungsgemäße Vorrichtung kann femer so ausgebildet sein, dass das Transportelement eine an ihren beiden Seiten im Gehäuse der Vorrichtung geführte Kratzerkette mit quer zur Transportrichtung verlaufenden, im Bereich des Untertrums nach unten vorstehenden Kratzerstegen ist.

Weiter sieht die Erfindung vor, dass das Transportelement ein an seinen beiden Seiten im Gehäuse der Vorrichtung geführter Scharnierbandförderer mit quer zur Transportrichtung verlaufenden Tragabschnitten ist.

Anschließend werden einige Ausführungsformen der erfindungsgemäßen Vorrichtung anhand von Zeichnungen beschrieben.

Es zeigt:
- Figur 1:: eine Seitenansicht einer erfindungsgemäßen Vorrichtung mit einer Kratzerkette,
- Figur 2:: eine Seitenansicht einer erfindungsgemäßen Vorrichtung mit einem Scharnierbandförderer,
- Figur 3:: eine Detailansicht einer Filtertrommel in Verbindung mit einer Kratzerkette,
- Figur 4:: eine Detailansicht einer Filtertrommel in Verbindung mit einem Scharnierbandförderer,
- Figur 5:: einen Axialschnitt durch eine erfindungsgemäß ausgebildete Filtertrommel für Trommelantriebe nach den Figuren 3 und 4,
- Figur 6:: eine Detailansicht einer weiteren Ausführungsform mit Kurbelantrieb der Filtertrommel in Verbindung mit einer Kratzerkette,
- Figur 7:: eine Detailansicht einer weiteren Ausführungsform mit Kurbelantrieb der Filtertrommel in Verbindung mit einem Schamierbandförderer,
- Figur 8:: einen Axialschnitt durch eine efindungsgemäß ausgebildete Filtertrommel mit einem Trommelantrieb entsprechend den Ausführungsformen nach Figur 6 oder 7.

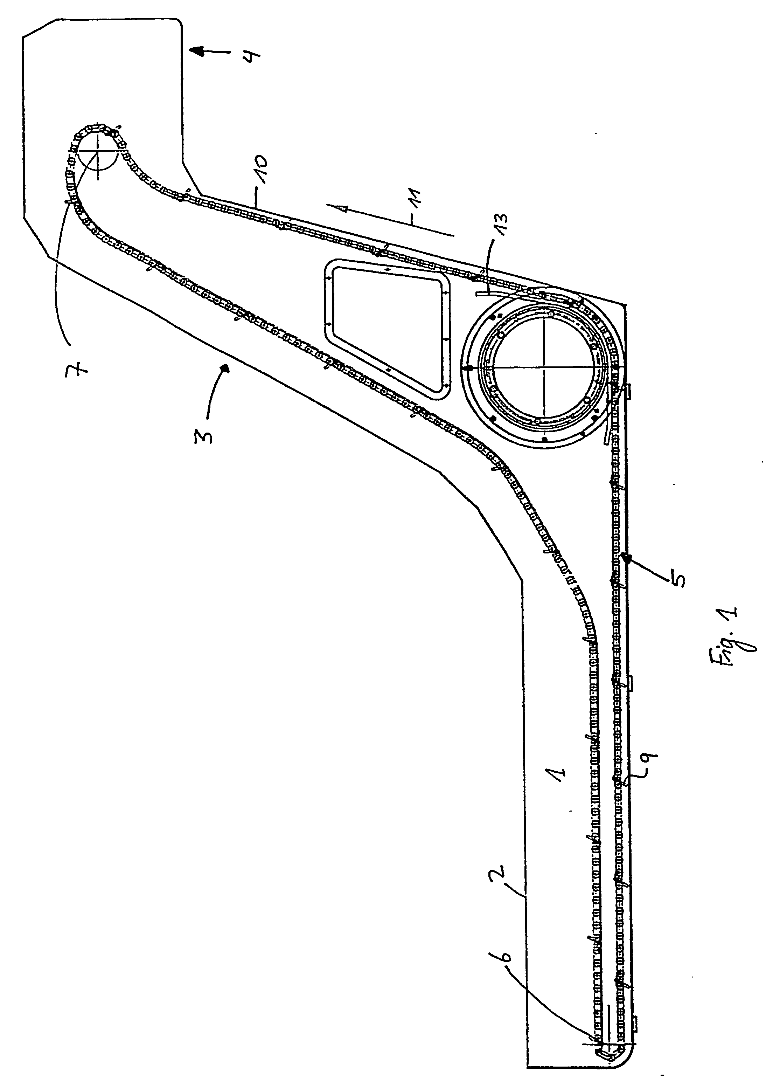

Figur 1 zeigt die Seitenansicht einer Ausführungsform der erfindungsgemäßen Vorrichtung mit einem Aufnahmetank 1, der nach oben offen ist und der an Werkzeugmaschinen anfallende Späne und Kühlflüssigkeit aufnimmt. Dieser Aufnahmetank hat eine Überlaufkante 2. An den Aufnahmetank schließt sich ein ansteigender Führungsabschnitt 3 an, der in einen erhöhten Abgabeabschnitt 4 übergeht.

Eine an ihren beiden Seiten rollengeführte Kratzerkette ist hier als Transportelement vorgesehen. Diese Kratzerkette ist um ein unteres Umlenkelement 6 am Ende des Aufnahmetanks 1 geführt und läuft im Bereich des Abgabeabschnitt 4 um ein oberes Umlenkelement 7, das mit einem nicht dargestellten Antrieb gekoppelt ist. Sie trägt auf Abstand angeordnete Kratzerelemente, die im Bereich des unteren Trums nach unten, also in Richtung auf den Boden des Aufnahmetanks 1 bzw. auf die Seitenwand 10 des ansteigenden Abschnitts 3 vorstehen. Die Transportrichtung der Kratzerkette 1 ist durch den Pfeil 11 angezeigt.

Es ist eine Filtertrommel 12 vorgesehen, die im Gehäuse der Vorrichtung drehbar gelagert ist. Die Kratzerkette umläuft die Filtertrommel in radialem Abstand, der durch eine Führungsschiene 13 bestimmt ist. An der Kratzerkette 5 sowie an der Filtertrommel 12 sind Mitnehmerelement vorgesehen, welche die Filtertrommel 12 beim Betrieb der Vorrichtung intermittierend schrittweise vorrücken.

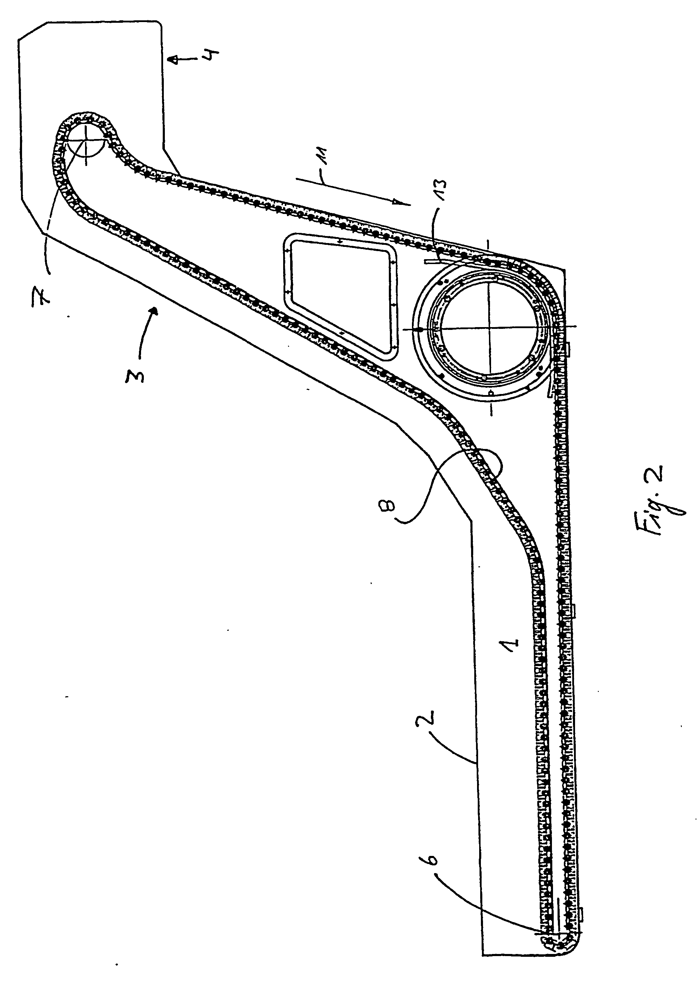

Die Ausführung gemäß Figur 2 unterscheidet sich von der gemäß Figur 1 lediglich dadurch, dass als Transportelement anstelle eines Kratzerbandes ein Scharnierband 14 verwendet wird, das also das zu transportierende Gut im Gegensatz zu einem Kratzerband überwiegend auf seiner Oberseite aufnimmt und trägt. Das Schamierband 14 ist dabei in seinem oberen Trum unterseitig mit einem Leitblech 8 abgedeckt.

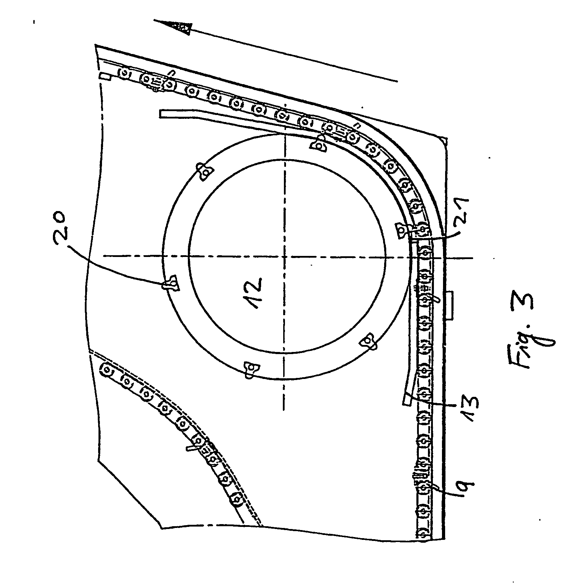

Figur 3 zeigt an der Filtertrommel 12 äquidistant angeordnete Zapfen 20, die mit Anschlägen 21 kooperieren, welche an der Kratzerkette 5 befestigt sind.

Weiterhin können die stegförmig ausgebildeten Kratzerelemente 9 und die Anschläge 21 eine bauliche Einheit sein.

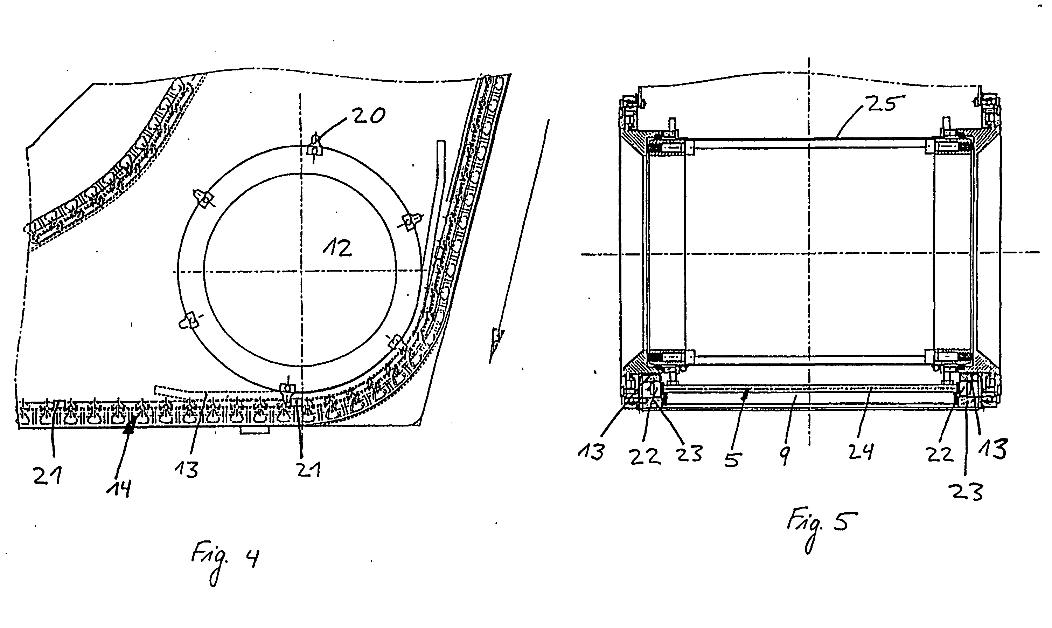

Figur 4 zeigt eine Ausführung gemäß Figur 3 mit einem Scharnierband 14.

Figur 5 zeigt einen Schnitt durch eine Filtertrommel 12 mit einem Scharnierband 14, dessen seitliche Rollen 22 in Führungen 23 laufen. Von dem Schamierband 14 ist ferner eine Haltestange 24 gezeigt, an der ein nach unten vorstehendes stegartiges Kratzerelement 9 sitzt. Die Filtertrommel 12 ist zu ihren beiden Enden hin gleich ausgebildet und in dem Gehäuse der Vorrichtung drehbar gelagert. Sie ist beiderseits offen und bildet somit auf beiden Seiten einen Auslass für die durch die Filterwand 25 durchgeführte gereinigte Kühlflüssigkeit.

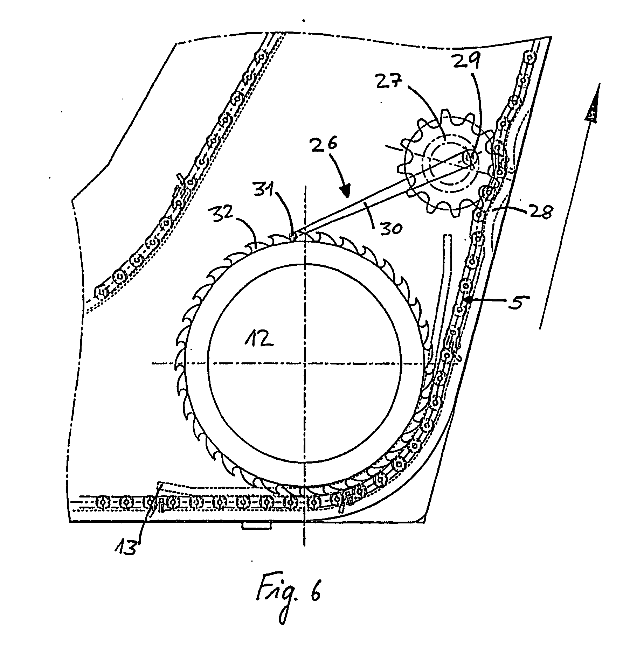

Die Ausführungsform nach Figur 6 weicht von der anhand der Figuren 3 und 4 beschriebenen dadurch ab, dass die Mitnehmerelemente durch ein Kurbelgetriebe 26 gebildet sind. Dieses Getriebe hat ein Zahnrad 27, das um eine feststehende, nicht dargestellte Achse drehbar ist. Das Zahnrad greift dabei zwischen die Rollen der Kratzerkette 5 ein, die rückseitig mit einer Abstützung 28 zusammenarbeitet, so dass die Kratzerkette 5 dem Angriff des Zahnrades 27 nicht ausweichen kann.

Auf dem Zahnrad 27 sitzt exzentrisch zur Achse des Zahnrades ein Kurbelzapfen 29, der eine Schubstange 30 trägt, an deren Ende wiederum ein Mitnehmerelement 31 sitzt, das in die Zahnung eines Klinkenrades 32 eingreift.

Beim Betrieb der Kratzerkette 5 bewirkt die Drehung des Zahnrades 27 über den Kurbelzapfen 29 aufeinander folgend das Vorrücken des Klinkenrades 32 bei jeder vollständigen Drehung des Zahnrades 27 um jeweils mindestens einen Zahn.

Durch eine radiale Verschiebbarkeit des Kurbelzapfens 29 in dem Zahnrad 27 kann der Hub der Zahnstange 30 verändert werden, so dass bei einer Drehung des Zahnrades 27 das Klinkenrad 32 um mehr als einen Zahn bewegt werden kann.

Ein besonderer Vorteil dieser Ausführungsform ist darin zu sehen, dass hier alle Elemente zum schritt weisen Vorrücken der Filtertrommel in einem Bereich der Vorrichtung untergebracht sind, in denen Verschmutzungen nur in geringerem Maße zu erwarten sind.

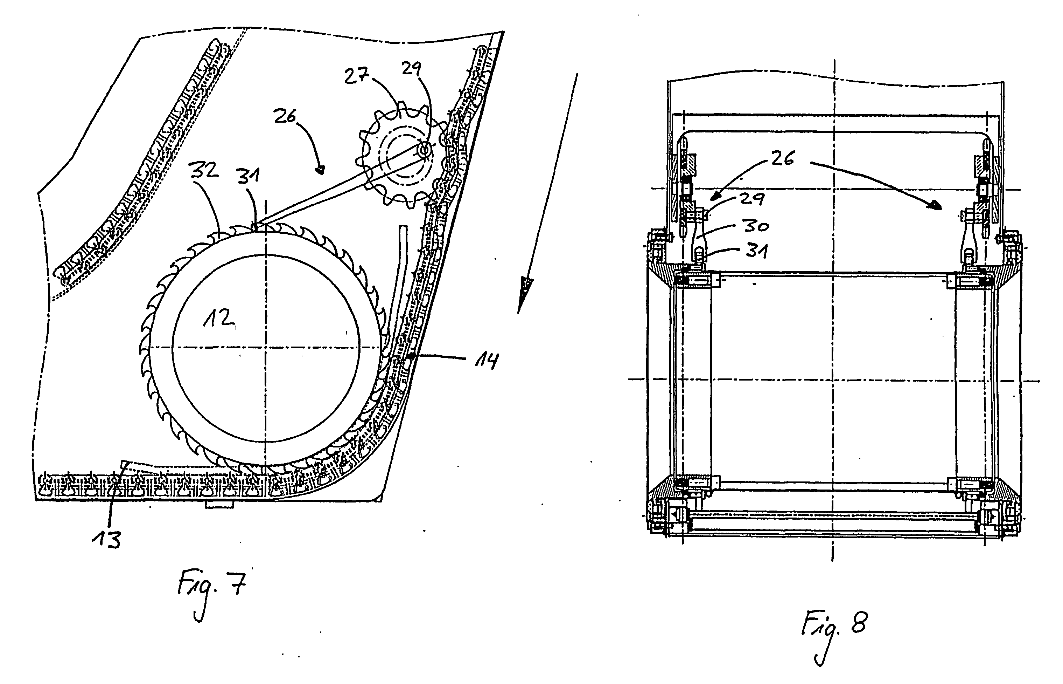

Figur 7 zeigt die Ausführung gemäß Figur 6 mit der Ausnahme, dass das Transportelement hier ein Scharnierbandförderer ist.

Figur 8 zeigt einen Schnitt durch die Filtertrommel sowie anschließend durch das Kurbelgetriebe entsprechend der in Figur 7 dargestellten Vorrichtung.

### Bezugszeichenliste

- 1: Aufnahmetank
- 2: Überlaufkante
- 3: Führungsabschnitt
- 4: Abgabeabschnitt
- 5: Kratzerkette
- 6: Umlenkelement
- 7: Umlenkelement
- 8: Leitblech
- 9: Kratzerelemente
- 10: Seitenwand
- 11: Pfeil
- 12: Filtertrommel
- 13: Führungsschiene
- 14: Scharnierband
- 15: .
- 16: .
- 17: .
- 18: .
- 19: .
- 20: Zapfen
- 21: Anschläge
- 22: Rollen
- 23: Führungen
- 24: Haltestange
- 25: Filterwand
- 26: Kurbelgetriebe
- 27: Zahnrad
- 28: Abstützung
- 29: Kurbelzapfen
- 30: Schubstange
- 31: Mitnehmerelement
- 32: Klinkenrad

## Patentansprüche

1. Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden,
mit einem Aufnahmetank (1) zur Aufnahme der Späne und der Kühlflüssigkeit,
einem sich an den Aufnahmetank (1) anschließenden ansteigenden Führungsabschnitt (3),
einem sich an den Führungsabschnitt (3) anschließenden erhöhten Abgabeabschnitt (4),
einem kettenartigen geschlossenen Transportelement, welches zumindest in dem die Späne und die Kühlflüssigkeit aufnehmenden Bereich sowie in dem Abgabeabschnitt (4) über Umlenkelemente (6, 7) geführt ist, von denen mindestens eines mit einem Drehantrieb gekoppelt ist, und
einer drehbar gelagerten Filtertrommel (12), welche mit dem Transportelement in Antriebsverbindung steht,
**dadurch gekennzeichnet,**
**dass** das Transportelement mit radialem Abstand zur Filtertrommel (12) auf Führungsschienen (13) an der Filtertrommel (12) entlang geführt ist
und **dass** an dem Transportelement sowie an der Filtertrommel (12) nur in Umfangsrichtung auf die Filtertrommel (12) wirkende, jeweils im Abstand voneinander angeordnete kooperierende Mitnehmerelemente vorgesehen sind.

2. Vorrichtung nach Anspruch 1,
**dadurch gekennzeichnet,**
**dass** die Mitnehmerelemente an der Filtertrommel (12) als vorstehende Zapfen (20) und am Transportelement als vorstehende, mit den Zapfen (20) kooperierende Anschläge (21) ausgebildet sind.

3. Vorrichtung nach Anspruch 1,
**dadurch gekennzeichnet,**
**dass** die Mitnehmerelemente ein Kurbelgetriebe (26) aufweisen, dessen Kurbel mit dem Transportelement in Antriebsverbindung steht und dessen Stange (30) ein Mitnehmerelement (31) trägt, das in die Zahnung eines mit der Filtertrommel (12) gekoppelten Klinkenrades (32) eingreift.

4. Vorrichtung nach Anspruch 3,
**dadurch gekennzeichnet,**
**dass** die Kurbel des Kurbelgetriebes (26) von einem Zahnrad (27) gebildet ist und an Rollen (22) des Transportelements angreift.

5. Vorrichtung nach Anspruch 3 oder 4,
**dadurch gekennzeichnet,**
**dass** der Kurbelradius des Kurbelgetriebes (26) einstellbar ist.

6. Vorrichtung nach einem der vorhergehenden Ansprüche,
**dadurch gekennzeichnet,**
**dass** das Transportelement eine an ihren beiden Seiten im Gehäuse der Vorrichtung geführte Kratzerkette (5) mit quer zur Transportrichtung verlaufenden, im Bereich des Untertrums nach unten vorstehenden Kratzerstegen (9) ist.

7. Vorrichtung nach einem der Ansprüche 1 - 5 ,
**dadurch gekennzeichnet,**
**dass** das Transportelement ein an seinen beiden Seiten im Gehäuse der Vorrichtung geführter Scharnierbandförderer (14) mit quer zur Transportrichtung verlaufenden Tragabschnitten ist.

8. Vorrichtung nach einem der vorgehenden Ansprüche,
**dadurch gekennzeichnet,**
**dass** die einerseits mit dem Transportelement und andererseits mit der Filtertrommel (12) verbundenen Mitnehmerelemente an beiden Seiten des Transportelements vorgesehen sind.

## Claims

1. Device for receiving and separating chips and cooling liquid collecting on machine tools, the cooling liquid being returned for reuse and the chips being discharged, having a receiving tank (1) for receiving the chips and the cooling liquid, a rising guide section (3) adjoining the receiving tank (1), an elevated delivery section (4) adjoining the guide section (3), a chain-like closed transport element which, at least in the region receiving the chips and the cooling liquid and in the delivery section (4), is guided via deflecting elements (6, 7), of which at least one is coupled to a rotary drive, and a rotatably mounted filter drum (12) which is in drive connection with the transport element, **characterized in that** the transport element is guided along the filter drum (12) at a radial distance from the latter on guide rails (13), and **in that** cooperating driver elements acting only in the circumferential direction on the filter drum (12) and arranged in each case at a distance from one another are provided on the transport element and on the filter drum (12).

2. Device according to Claim 1, **characterized in that** the driver elements on the filter drum (12) are designed as projecting pins (20) and the driver elements on the transport element are designed as projecting stops (21) cooperating with the pins (20).

3. Device according to Claim 1, **characterized in that** the driver elements have a crank mechanism (26), the crank of which is in drive connection with the transport element and the rod (30) of which carries a driver element (31) which engages in the tooth system of a ratchet wheel (32) coupled to the filter drum (12).

4. Device according to Claim 3, **characterized in that** the crank of the crank mechanism (26) is formed by a gearwheel (27) and engages on rollers (22) of the transport element.

5. Device according to Claim 3 or 4, **characterized in that** the crank radius of the crank mechanism (26) is adjustable.

6. Device according to one of the preceding claims, **characterized in that** the transport element is a scraper chain (5) guided at its two sides in the housing of the device and having scraper webs (9) running transversely to the transport direction and projecting downwards in the region of the bottom strand.

7. Device according to one of Claims 1 to 5, **characterized in that** the transport element is a hinged belt conveyor (14) guided at its two sides in the housing of the device and having supporting sections running transversely to the transport direction.

8. Device according to one of the preceding claims, **characterized in that** the driver elements connected on the one hand to the transport element and on the other hand to the filter drum (12) are provided on both sides of the transport element.

## Revendications

1. Dispositif de récupération et de séparation de copeaux et de liquide de refroidissement se présentant sur les machines-outils, dans lequel le liquide de refroidissement est recyclé pour un nouvel usage et les copeaux sont évacués, comportant
une citerne de récupération (1) pour récupérer les copeaux et le liquide de refroidissement,
une section de guidage (3) ascendante se raccordant à la citerne de récupération (1),
une section de déversement surélevée (4) se raccordant à la section de guidage (3),
un élément de transport fermé de type chaîne, qui est guidé du moins dans la zone recevant les copeaux et le liquide de refroidissement ainsi que dans la section de déversement (4) par des éléments d'inversion (6, 7) dont au moins un est couplé à une commande rotative, et
un tambour de filtrage (12) s'appuyant en rotation, qui est en liaison de commande avec l'élément de transport,
**caractérisé en ce que**
l'élément de transport est guidé à distance radiale du tambour de filtrage (12) sur des rails de guidage (13) le long du tambour de filtrage (12)
et que, sur l'élément de transport ainsi que sur le tambour de filtrage (12), des éléments d'entraînement coopérants agissant uniquement dans le sens circonférentiel sur le tambour de filtrage (12) et disposés respectivement à distance les uns des autres sont prévus.

2. Dispositif selon la revendication 1,
**caractérisé en ce que**
les éléments d'entraînement placés sur le tambour de filtrage (12) sont réalisés sous forme de tourillons proéminents (20) et ceux placés sur l'élément de transport sont réalisés sous forme de butées (21) proéminentes coopérant avec les tourillons (20).

3. Dispositif selon la revendication 1,
**caractérisé en ce que**
les éléments d'entraînement présentent une transmission à manivelle (26), dont la manivelle est en liaison de commande avec l'élément de transport et dont la barre (30) supporte un élément d'entraînement (31) qui s'engrène dans la denture d'une roue à cliquet (32) couplée au tambour de filtrage (12).

4. Dispositif selon la revendication 3,
**caractérisé en ce que**
la manivelle de la transmission à manivelle (26) est constituée par une roue dentée (27) et s'engrène sur des rouleaux (22) de l'élément de transport.

5. Dispositif selon la revendication 3 ou 4,
**caractérisé en ce que**
le rayon de manivelle de la transmission à manivelle (26) est réglable.

6. Dispositif selon l'une quelconque des revendications précédentes,
**caractérisé en ce que**
l'élément de transport est une chaîne de raclage (5) guidée de ses deux côtés dans l'enceinte du dispositif et munie de traverses de raclage (9) s'étendant transversalement par rapport au sens de transport et saillant vers le bas au niveau du canal inférieur.

7. Dispositif selon l'une quelconque des revendications 1 à 5,
**caractérisé en ce que**
l'élément de transport est un convoyeur à bande à charnières (14) guidé des deux côtés dans l'enceinte du dispositif et comportant des sections porteuses s'étendant transversalement au sens de transport.

8. Dispositif selon l'une quelconque des revendications précédentes,
**caractérisé en ce que**
les éléments d'entraînement reliés d'une part à l'élément de transport et d'autre part au tambour de filtrage (12) sont prévus des deux côtés de l'élément de transport.
